(19) Europäisches Patentamt
European Patent Office
Office européen des brevets

(11) **EP 3 605 050 B1**

(12) **EUROPEAN PATENT SPECIFICATION**

(45) Date of publication and mention of the grant of the patent:
**29.06.2022 Bulletin 2022/26**

(21) Application number: **18774526.0**

(22) Date of filing: **23.01.2018**

(51) International Patent Classification (IPC):
**G01M 99/00** $^{(2011.01)}$ **F17D 5/00** $^{(2006.01)}$
**G06Q 50/06** $^{(2012.01)}$

(52) Cooperative Patent Classification (CPC):
**G06Q 50/06; E03B 7/003; E03B 7/07;** E03B 7/075

(86) International application number:
**PCT/JP2018/001922**

(87) International publication number:
**WO 2018/179727 (04.10.2018 Gazette 2018/40)**

(54) **PIPE DIAGNOSIS DEVICE, ASSET MANAGEMENT DEVICE AND PIPE DIAGNOSIS METHOD.**

ROHRDIAGNOSEVORRICHTUNG, VORRICHTUNG ZUR OBJEKTVERWALTUNG UND ROHRDIAGNOSEVERFAHREN.

DISPOSITIF DE DIAGNOSTIC DE TUYAU, DISPOSITIF DE GESTION D'ACTIF ET PROCÉDÉ DE DIAGNOSTIC DE TUYAU.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2017 JP 2017062649**

(43) Date of publication of application:
**05.02.2020 Bulletin 2020/06**

(73) Proprietor: **NEC Corporation**
**Tokyo 108-8001 (JP)**

(72) Inventors:
• **SAKAI, Jun**
**Tokyo 108-8001 (JP)**
• **KUMURA, Takahiro**
**Tokyo 108-8001 (JP)**
• **KUSUMOTO, Manabu**
**Tokyo 108-8001 (JP)**
• **TAKATA, Soichiro**
**Tokyo 108-8001 (JP)**

(74) Representative: **Betten & Resch**
**Patent- und Rechtsanwälte PartGmbB**
**Maximiliansplatz 14**
**80333 München (DE)**

(56) References cited:
EP-A2- 2 905 528     JP-A- H 049 000
JP-A- H04 283 646     JP-A- H06 347 320
JP-A- 2007 219 727    US-A1- 2014 224 026

**Description**

TECHNICAL FIELD

The present invention relates to a pipe diagnosis apparatus and a pipe diagnosis method for diagnosing a failure risk of piping equipment such as water supply equipment, and further relates to a computer-readable recording medium in which programs for realizing the apparatus and method are stored, and an asset management apparatus in which the pipe diagnosis apparatus is used.

BACKGROUND ART

The scale of piping equipment such as water supply pipe networks are often incredibly large. In addition, progression of deterioration of a pipe buried under ground may differ according to the acidity, potential, pressure, and the like of the soil in which the pipe is buried. Therefore, there are cases where a relatively new pipe deteriorates rapidly and needs to be replaced at an early stage. Thus, there is demand for techniques for appropriately diagnosing the current degree of deterioration of a pipe and future progression of the deterioration so as to enable accurate and efficient repairing and replacement of the pipe.

Regarding a technique for diagnosing the current degree of deterioration of a pipe, Patent Document 1 discloses a technique related to non-destructive inspection of a pipe. In the technique disclosed in Patent Document 1, first, an actual measurement value indicating the propagation speed of vibrations that propagate along a pipe through two points that are spaced apart in the longitudinal direction of the pipe is acquired. Subsequently, the thickness of the pipe is back-calculated by adapting the actual measurement value to an equation for obtaining the thickness of a pipe from the value of propagation speed.

Then, in the technique disclosed in Patent Document 1, the current degree of deterioration of the pipe is determined based on the calculated thickness of the pipe, and progression of the deterioration of the pipe is diagnosed.

Prior-art document EP2905528 discloses a pipe inspection system, which samples and analyses successive pressure measurements.

LIST OF RELATED ART DOCUMENTS

PATENT DOCUMENT

Patent document 1: Japanese Patent Laid-Open Publication No. 2013-61350

SUMMARY OF INVENTION

PROBLEMS TO BE SOLVED BY THE INVENTION

However, in the technique disclosed in Patent document 1 above, it is impossible to estimate the future progression speed of deterioration of a water pipe and the lifespan of the water pipe based thereon. Therefore, an appropriate time to replace the pipe cannot be estimated, and a problem arises in that water supply businesses cannot determine economically efficient replacement priorities for a large number of pipes owned by them.

An example object of the invention is to provide a pipe diagnosis apparatus, an asset management apparatus, a pipe diagnosis method, and a computer-readable recording medium that enable estimation of future progression of deterioration of pipes in piping equipment, in light of the above-described issues.

MEANS FOR SOLVING THE PROBLEMS

In order to achieve the aforementioned object, a pipe diagnosis apparatus according to an example aspect of the invention includes:

a time-series data acquisition unit configured to acquire time-series data on pressure of a fluid in piping equipment to be diagnosed;
a pressure change measurement unit configured to measure the number of pressure changes in the fluid from the time-series data on the pressure of the fluid; and
a failure risk estimation unit configured to estimate a failure risk of the piping equipment based on the measured number of pressure changes and a strength of a pipe included in the piping equipment.

The invention consists of a pipe diagnosis apparatus as defined in claim 1 and a pipe diagnosis method as defined in claim 8.

ADVANTAGEOUS EFFECTS OF THE INVENTION

As described above, according to the invention, it is possible to estimate future progression of deterioration of a pipe in piping equipment.

BRIEF DESCRIPTION OF THE DRAWINGS

FIG. 1 is a block diagram illustrating a schematic configuration of a pipe diagnosis apparatus in an example embodiment of the invention.
FIG. 2 is a block diagram illustrating a specific configuration of the pipe diagnosis apparatus in the example embodiment of the invention.

FIG. 3 is an explanatory diagram illustrating pressure and stress that are applied to a pipe.

FIG. 4 is a diagram illustrating an example of an S-N curve of a pipe.

FIG. 5 is a flow chart illustrating operations of the pipe diagnosis apparatus in the example embodiment of the invention.

FIG. 6 is a diagram illustrating an example of time-series data on hydraulic pressure at a point within a water distribution block.

FIG. 7 is a block diagram illustrating a configuration of an asset management apparatus in an example embodiment of the invention.

FIG. 8 is a block diagram illustrating an example of a computer that realizes the pipe diagnosis apparatus in the example embodiment of the invention.

EXAMPLE EMBODIMENT

(Example Embodiment)

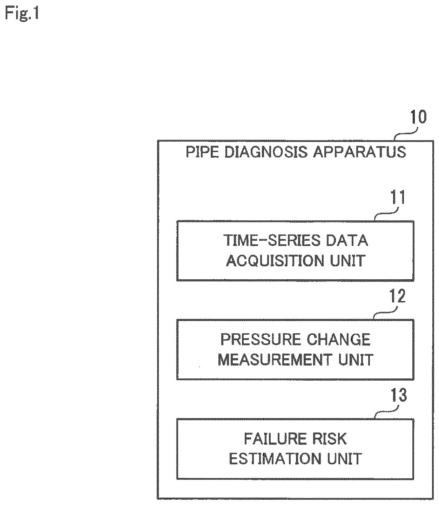

A pipe diagnosis apparatus, a pipe diagnosis method, and a computer-readable recording medium in an example embodiment of the invention will be described below with reference to FIGS. 1 to 8.

[Apparatus Configuration]

First, the configuration of the pipe diagnosis apparatus in the present example embodiment will be described with reference to FIG. 1. FIG. 1 is a block diagram illustrating a schematic configuration of the pipe diagnosis apparatus in the example embodiment of the invention.

A pipe diagnosis apparatus 10 in the present example embodiment shown in FIG. 1 is an apparatus for diagnosing future deterioration of piping equipment to be diagnosed. As shown in FIG. 1, the pipe diagnosis apparatus 10 is provided with a time-series data acquisition unit 11, a pressure change measurement unit 12, and a failure risk estimation unit 13.

The time-series data acquisition unit 11 acquires time-series data on the pressure of a fluid in piping equipment to be diagnosed. The pressure change measurement unit 12 measures the number of times pressure changes in the fluid, based on the time-series data on the pressure of the fluid. The failure risk estimation unit 13 estimates a failure risk of piping equipment based on the measured number of pressure changes and the strength of pipes included in the piping equipment.

In this manner, in the present example embodiment, a failure risk of piping equipment to be diagnosed is estimated, and thus it is possible to estimate future progression of deterioration of pipes. Accordingly, it is also possible to determine appropriate replacement times and replacement order of pipes in the piping equipment.

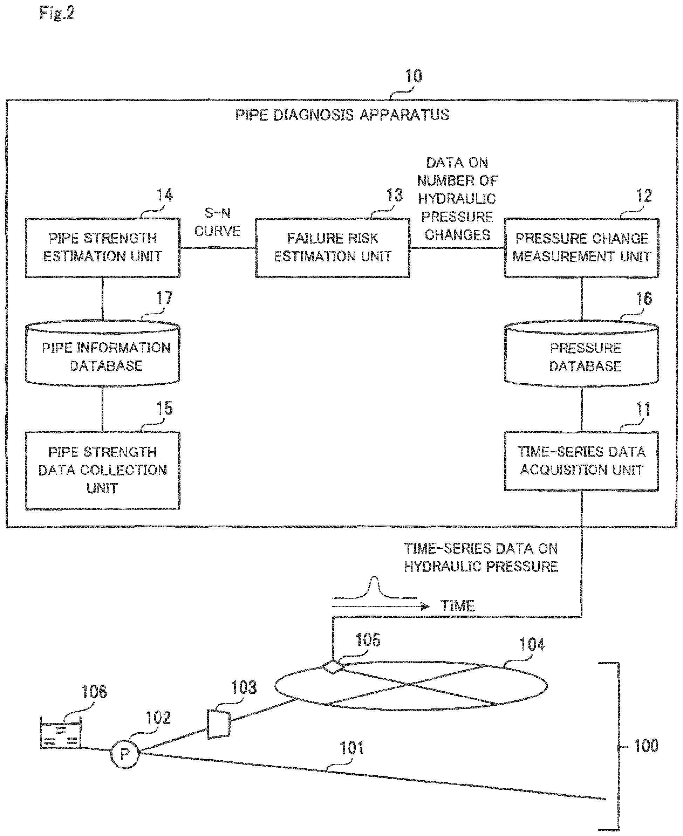

Subsequently, the configuration of the pipe diagnosis apparatus in the present example embodiment will be described in detail with reference to FIG. 2. FIG. 2 is a block diagram illustrating a specific configuration of the pipe diagnosis apparatus in the example embodiment of the invention.

First, the piping equipment to be diagnosed in the present example embodiment will be described. As illustrated in FIG. 2, in the present example embodiment, piping equipment 100 is a water pipe network that makes up a water-and-sewage system, and the fluid is water. The piping equipment 100 is provided with a water purification plant 106, a water main 101, and a water distribution block 104.

In addition, a pump 102 is installed between the water purification plant 106 and the water main 101, depending on the shape of the land on which the piping equipment 100 is installed. In this case, the pump 102 applies pressure so as to supply water to an end of the water distribution block 104, and thus water is discharged from the end.

Normally, the pump 102 delivers water under high pressure during the daytime due to an increase in water demand, and under low hydraulic pressure late at night due to a decrease in water demand. When switching the operation mode of this pump 102, a hydraulic pressure change of a large amplitude occurs, and pressure waves propagate to the water main 101. This propagation of a hydraulic pressure change is also called "water hammer".

On the other hand, a pressure reducing valve 103 is installed at the inlet of the water distribution block 104 so that excessive hydraulic pressure does not act inside the water distribution block 104. If the hydraulic pressure on the water main 101 side, which is the input side, is higher than the hydraulic pressure on the water distribution block 104 side, which is the output side, the pressure reducing valve 103 adjusts the hydraulic pressure on the output side is constant. This pressure reducing valve 103 prevents water hammer of a large amplitude propagated through the water main 101 from propagating into the water distribution block 104, and a load on a water facility such as piping in the water distribution block 104 is suppressed.

However, even if the pressure reducing valve 103 can shield the water distribution block 104 from external water hammer, water hammer also occurs in the water distribution block 104 due to quick opening/closing of a valve, generation and collapse of an air bubble, quick opening/closing of a faucet when a consumer uses water, and the like. Such water hammer causes stress change in pipes, and fatigues the pipes.

This is because minute cracks occur in a pipe at the time of manufacturing and over long periods of use, the cracks grow every time the whole pipe expands and shrinks due to a stress change. Then, if stress changes occur repeatedly over long periods of use, fatigue progresses and the pipe breaks. Therefore, in order to estimate a time to replace each pipe of a water pipe network that makes up the water distribution block 104, it is important to evaluate not only the deterioration state of the pipes but also hydraulic pressure change that occurs in the pipes, and to estimate the speed of progression of deterioration.

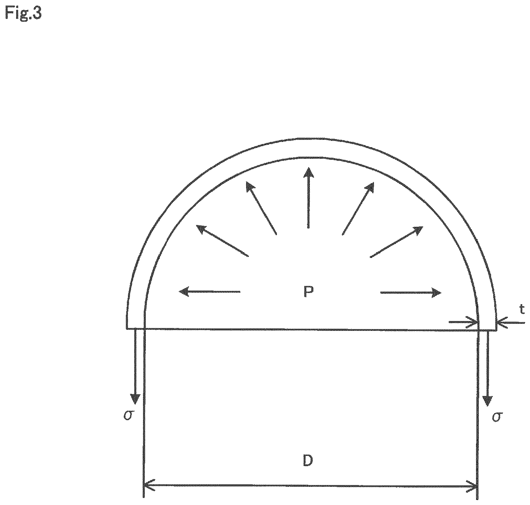

The relationship between such repetitive stress changes and fatigue breakdown will be described. FIG. 3 is an explanatory diagram illustrating pressure and stress that are applied to a pipe. In the example in FIG. 3, to facilitate description, only half of a cross section of a pipe is shown. First, as shown in FIG. 3, when pressure p is applied to a cylindrical pipe having a diameter d and a thickness t, stress σ acts so as to expand the pipe in its circumferential direction. This stress is called hoop stress, and is calculated based on Formula 1 below.

[Formula 1]

$$\sigma = \frac{pd}{2t}$$

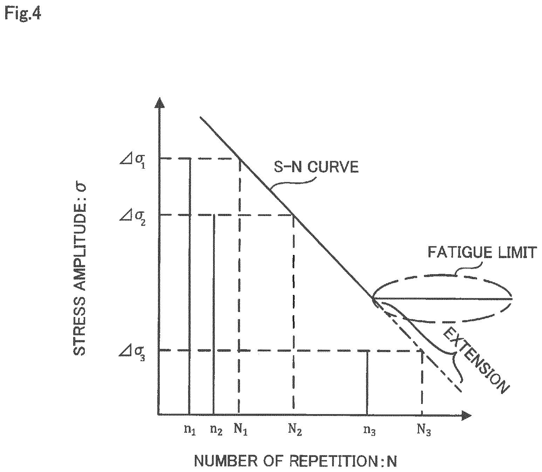

When a stress change of a certain amplitude $\Delta\sigma$ occurs repeatedly in the pipe shown in FIG. 3, the pipe breaks at a certain number of times N. FIG. 4 is a diagram illustrating an example of an S-N curve of a pipe. Assume that, as shown in FIG. 4, a stress change of an amplitude $\Delta\sigma_1$ repeatedly occurs in the pipe, and the pipe breaks at the $N_1$th time. Similarly, assume that a stress change of an amplitude $\Delta\sigma_2$ repeatedly occurs in the pipe, and the pipe breaks at the $N_2$th time. In this case, the S-N curve shown in FIG. 4 is acquired as a strength characteristic of the pipe.

Regarding an ordinary steel material, in the case of an amplitude of a certain magnitude or smaller, a stress amplitude value that can be applied without causing fracturing even if the number of repetitions is increased does exist, and this is called a "fatigue limit". The amplitude of a stress change due to a hydraulic pressure change is sufficiently smaller than the fatigue limit of the pipe, and has been conventionally considered to be ignorable.

In contrast, in the pipe diagnosis apparatus 10 in the present example embodiment, progress of deterioration due to a stress amplitude that is smaller than or equal to this fatigue limit is also taken into consideration, the inclination of the S-N curve is extended along a straight line to the fatigue limit or lower, and all of the stress amplitudes are accumulated as damage. In the example in FIG. 4, the number of times at a position at which a stress change amplitude $\Delta\sigma_3$ that is smaller than or equal to the fatigue limit intersects with the extended line of the S-N curve is $N_3$.

The above-described S-N curve is generated by fixing an amplitude of a stress change and conducting fatigue tests until a break occurs, but stress of various amplitudes is applied in a complex manner to an actual pipe, and thus it is necessary to perform comprehensive evaluation. Here, assume that, after a pipe has been manufactured and installed, a hoop stress change of an amplitude $\sigma_1$ occurs $n_1$ times, a hoop stress change of an amplitude $\sigma_2$ occurs $n_2$ times, and a hoop stress change of an amplitude $\sigma_3$ occurs $n_3$ times. The degree of fatigue D of the pipe at this time can be evaluated using Formula 2 below. A larger degree of fatigue D indicates a higher risk of breaking. The maximum value of the degree of fatigue D is 1.

[Formula 2]

$$D = \frac{n_1}{N_1} + \frac{n_2}{N_2} + \frac{n_3}{N_3} = \sum \frac{n_i}{N_i}$$

Next, the configuration of the pipe diagnosis apparatus in the present example embodiment will be described below in detail. As shown in FIG. 2, the pipe diagnosis apparatus 10 is provided with a pipe strength estimation unit 14, a pipe strength data collection unit 15, a pressure database 16, and a pipe information database 17, in addition to the time-series data acquisition unit 11, the pressure change measurement unit 12, and the failure risk estimation unit 13 that have been described above.

In the present example embodiment, the time-series data acquisition unit 11 acquires time-series data using data that is output by a pressure sensor 105 installed in a pipe included in the piping equipment 100. Specifically, the pressure sensor 105 is installed in a pipe in the water distribution block 104, and outputs data for specifying the pressure of water (hydraulic pressure) that flows through the pipe, at set intervals. In addition, in the example in FIG. 2, only a single pressure sensor 105 is illustrated, but in actuality, a plurality of pressure sensors 105 may be installed at respective portions of the water distribution block 104.

In addition, the pressure sensor 105 may also be installed in a telemeter near the pressure reducing valve 103 at the inlet of the water distribution block 104. Furthermore, the pressure sensor 105 may also be installed at any position in the water distribution block 104, for example, at a location of a fire hydrant or a pressure release valve. In order to appropriately measure hydraulic pressure changes that affect a pipe, it is desirable that the pressure sensor 105 measures hydraulic pressure at a frequency of 100 samples per second or more.

The time-series data acquisition unit 11 acquires time-series data on hydraulic pressure output by this pressure sensor 105, and stores the acquired time-series data in the pressure database 16. In addition, the pressure sensor 105 may also have a function of transmitting data in a wireless or wired manner. In that case, the time-series data acquisition unit 11 acquires time-series data by receiving data transmitted from the pressure sensor 105.

In addition, the pressure sensor 105 may also be a field-portable sensor provided with a data storage apparatus. In this case, the pressure sensor 105 is installed at any location in the water distribution block 104 for a few days, and, during this period of time, measures time-series data on hydraulic pressure, and stores the data. Then, the time-series data acquisition unit 11 acquires the time-series data on the hydraulic pressure from the data storage apparatus of the pressure sensor 105.

In addition, in the present example embodiment, the time-series data acquisition unit 11 can also acquire pressure estimated using a hydraulic simulator as time-series data, regarding all or some of the pipes included in the piping equipment 100. Accordingly, hydraulic pressure is directly measured at a location where the pressure sensor 105 is installed, and the measurement value is used directly, but pressure is not measured at a location where the pressure sensor 105 is not installed. At such a location where the pressure sensor 105 is not installed, the time-series data acquisition unit 11 can estimate hydraulic pressure using the time-series data measured in the same water distribution block 104 and the hydraulic simulator.

Specifically, in this case, the time-series data acquisition unit 11 generates a pipe network analysis model based on calibers, materials, distances, and connection information of target pipes of the water distribution block 104, inputs time-series data measured at installation locations of the pressure sensors 105 to the generated model, and executes analysis. Accordingly, time-series data on hydraulic pressure at each point in the water distribution block 104 is calculated. Examples of such a hydraulic simulator include EPANET and the like.

In the present example embodiment, the pressure change measurement unit 12 measures the number of hydraulic pressure changes, from the acquired time-series data on the hydraulic pressure, for each portion of the water distribution block 104. In addition, when measuring a change, the pressure change measurement unit 12 also measures the range of the amplitude at that time. Examples of a method for measuring a coefficient for hydraulic pressure change includes a rainflow counting method. The rainflow counting method conforms to a hysteresis curve of a material, and thus is suitable for fatigue lifespan estimation. In addition, it is also possible to use a peak count method, a level crossing count method, a mean crossing count method, a range count method, a range-pair count method, and the like.

The pipe strength data collection unit 15 collects strength data on a pipe that has been input from the outside, or deterioration data indicating the state of deterioration of a pipe. In addition, the strength data that is input may also be acquired by measuring the actual strength of a target pipe. Examples of a strength measurement method include a method for directly measuring a thickness, a magnetic flux leakage method (MFL method) for measuring strength using a magnetic field sensor, a remote field eddy current method (RFEC method) for measuring an excessive current, and a broadband electromagnetic method (BEM method). Note that, in order to carry out these methods, soil around a location in which the pipe is buried needs to be excavated in advance.

In addition, examples of a method for measuring the strength of a pipe without excavating soil in a state where the pipe is buried include a method for estimating a thickness from a sound speed, which is disclosed in Patent Document 1 above. In addition, a method in which a camera is inserted into a pipe, the surface of the pipe wall is observed, and the deterioration state of the pipe is roughly estimated is also included. The pipe strength data collection unit 15 stores strength data and deterioration data on a pipe that have been collected in this manner, to a pipe information database 17.

The pipe information database 17 may also store information for specifying the material, caliber, distance, time when the pipe was laid, place, and the like of each pipe, in addition to the strength data and the deterioration data. Furthermore, the pipe information database may also store data on an S-N curve indicating the strength of a pipe, based on experimental data or document information, for each material and caliber of the pipe. Regarding this S-N curve, both data on a new pipe and data on a deteriorated pipe are preferably stored, and, in this case, in particular, the S-N curve of the deteriorated pipe is stored in association with the degree of strength of the pipe corresponding thereto.

The pipe strength estimation unit 14 estimates the strength of each of the pipes that make up the piping equipment 100. Specifically, the pipe strength estimation unit 14 estimates the strength of a target pipe based on information stored in the pipe information database 17, and outputs an S-N curve.

Specifically, regarding a pipe whose strength has been directly measured, the pipe strength estimation unit 14 selects or generates an S-N curve corresponding to the measurement result. In addition, regarding a pipe whose strength has not been measured directly, the pipe strength estimation unit 14 generates an S-N curve of the target pipe, from the pipe information database 17, based on an S-N curve of a pipe whose material and caliber are the same as those of the target pipe.

Furthermore, if an S-N curve of a pipe having the same material and caliber as the target pipe is not stored in the pipe information database 17, the pipe strength estimation unit 14 calculates an S-N curve of the target pipe from the S-N curve of a pipe having the same material but a different caliber.

In addition, if the strength of the target pipe has not been measured, the pipe strength estimation unit 14 can estimate the degree of deterioration based on the number of years that have elapsed since the target pipe was laid and the average lifespan of a pipe, and generate an S-N curve of the target pipe based on the estimated degree of deterioration.

In the present example embodiment, the failure risk estimation unit 13 calculates, as a failure risk, an index whose value increases as the number of pressure changes increases. Note that a failure risk is not limited to this example, and an index whose value increases as the amplitude of pressure change increases may also be calculated as a failure risk.

Specifically, the failure risk estimation unit 13 calculates an index indicating a failure risk for each target pipe, using the number of hydraulic pressure changes measured by the pressure change measurement unit 12 and the S-N curve of the target pipe estimated by the pipe strength estimation unit 14. The failure risk estimation unit 13 can use one or more indexes as an index of a failure risk, according to the type of data acquired for calculation.

For example, if the cumulative number of hydraulic pressure changes $n_1$, $n_2$, and $n_3$ from when a pipe was laid has been acquired, the failure risk estimation unit 13 can calculate the degree of fatigue D using Formula 2 above, and outputs the calculated degree of fatigue D as a failure risk of the pipe.

In addition, if D = 1 in Formula 2 above, an estimated time when a pipe will break is statistically indicated, and thus the failure risk estimation unit 13 can estimate the remaining lifespan of the pipe using this. Specifically, assuming that, when the current degree of fatigue is D and the present time is a time $\Delta t$, hoop stress changes of amplitudes $\sigma_1$, $\sigma_2$, $\sigma_3$, ..., $\sigma_i$ respectively occur $\Delta n_1$, $\Delta n_2$, $\Delta n_3$, ..., $\Delta n_i$th times, the failure risk estimation unit 13 first calculates an increase rate $\Delta D/\Delta t$ of the degree of fatigue per unit of time using Formula 3 below.

[Formula 3]

$$\frac{\Delta D}{\Delta t} = \left(\frac{\Delta n_1}{N_1} + \frac{\Delta n_2}{N_2} + \frac{\Delta n_3}{N_3}\right)\frac{1}{\Delta t} = \frac{1}{\Delta t}\sum\frac{\Delta n_i}{N_i}$$

Then, in Formula 3 above, a period of time (remaining lifespan) t' until D = 1 is D+t' $\Delta D/\Delta t$ = 1, and thus the failure risk estimation unit 13 calculates the length of the time period (remaining lifespan) t', using Formula 4 below.

[Formula 4]

$$t' = \frac{\Delta t(1 - D)}{\sum\frac{\Delta n_i}{N_i}}$$

In addition, even if the cumulative number of hydraulic pressure changes from when a pipe was laid cannot be acquired, the failure risk estimation unit 13 can estimate the current degree of fatigue by multiplying the increase rate $\Delta D/\Delta t$ of the degree of fatigue acquired from the number of hydraulic pressure changes that has been observed, by the length of time that has elapsed from when the pipe was laid. In addition, even if the cumulative number of hydraulic pressure changes from when the pipe was laid cannot be acquired, if the current strength data can be acquired, the failure risk estimation unit 13 estimates the degree of fatigue D from the current strength data. In this case, the failure risk estimation unit 13 further estimates a failure risk from the estimated degree of fatigue D.

As described above, in the present example embodiment, one of the degree of fatigue D, the increase rate $\Delta D/\Delta t$ of the degree of fatigue D, and the estimated remaining lifespan t' can be used as an index of a failure risk, and, furthermore, an index acquired by combining these may also be generated.

In addition, in the above-described example, the pressure sensor 105 is installed in the water distribution block 104, and a pipe in the water distribution block 104 is to be diagnosed, but the present example embodiment is not limited to this example. In the present example embodiment, all of the pipes that make up a water pipe network such as the water main 101 are to be diagnosed.

[Apparatus Operations]

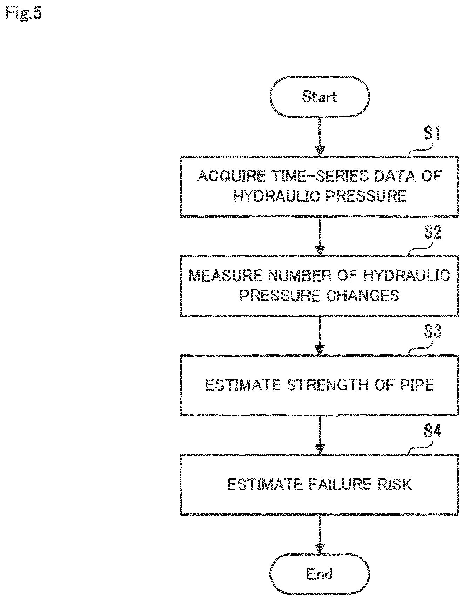

Next, operations of the pipe diagnosis apparatus 10 in the present example embodiment will be described with reference to FIG. 5. FIG. 5 is a flow chart illustrating operations of the pipe diagnosis apparatus in the example embodiment of the invention. The following description is given with reference to FIGS. 1 to 4 as appropriate. In addition, in the present example embodiment, a pipe diagnosis method is carried out by operating the pipe diagnosis apparatus 10. Thus, description of the pipe diagnosis method in the present example embodiment is substituted by the following description of operations of the pipe diagnosis apparatus 10.

As shown in FIG. 5, first, the time-series data acquisition unit 11 acquires time-series data on hydraulic pressure using data that is output by the pressure sensor 105 installed in a pipe that is included in the piping equipment 100 (step S1). The time-series data acquisition unit 11 also stores the acquired time-series data in the pressure database 16.

Next, the pressure change measurement unit 12 acquires, from the pressure database 16, the time-series data on the hydraulic pressure acquired in step S1, and measures, from the acquired time-series data on the hydraulic pressure, the number of hydraulic pressure changes for each portion of the water distribution block 104 (step S2).

Next, the pipe strength estimation unit 14 estimates the strength of the target pipe based on information stored in the pipe information database 17, and outputs an S-N curve of the pipe as estimated strength (step S3).

Next, the failure risk estimation unit 13 calculates an index indicating a failure risk for each pipe to be diagnosed, using the number of hydraulic pressure changes measured in step S2 and the S-N curve of the target pipe estimated in step S3 (step S4). In addition, the calculated index indicating a failure risk is transmitted to an administrator's terminal apparatus connected to the pipe diagnosis apparatus 10, and is displayed on the screen of the terminal apparatus. Accordingly, the administrator of the piping equipment 100 can determine appropriate replacement times and a replacement order of the pipe.

[Specific Example]

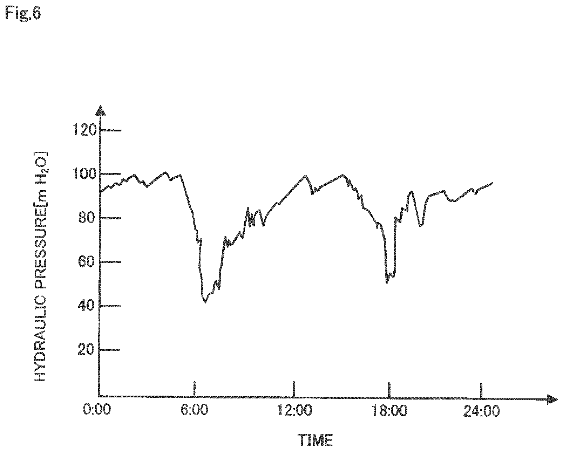

Subsequently, a specific example of the present example embodiment will be described with reference to FIG. 6. FIG. 6 is a diagram illustrating an example of time-series data on a hydraulic pressure at a point in a water distribution block. In the example in FIG. 6, measurement values of time-series data on hydraulic pressure for a day are shown, and, when water is not used, the hydraulic pressure at this point is 100 [$mH_2O$].

As shown in FIG. 6, when water is used, a pressure loss occurs when water is delivered to the point, and thus the hydraulic pressure decreases. In particularly, after six o'clock in the morning and at about six o'clock in the evening, the amount of water used by residents reaches a local maximum, and thus the hydraulic pressure falls close to 40 to 50 [$mH_2O$]. In addition, when a resident quickly opens/closes a faucet, water hammer occurs, and a large number of water hammer events occur particularly during the time period from six to ten o'clock,

Pressure changes that cause a pipe to fatigue include both changes ranging from 40 to 100 [$mH_2O$] over a day and the number of changes [$mH_2O$] due to water being used. By counting the number of hydraulic pressure changes using the rainflow counting method, and combining this number of hydraulic pressure changes with the S-N curve of the water pipe, it is possible to obtain the increase rate $\Delta D/\Delta t$ of the degree of fatigue per day. In addition, by multiplying the increase rate by the number of elapsed days obtained from the number of years Y that have elapsed since the pipe was installed, it is possible to obtain the degree of fatigue D at the present point in time, and it is also possible to obtain an estimated remaining lifespan t.

[Asset Management Apparatus]

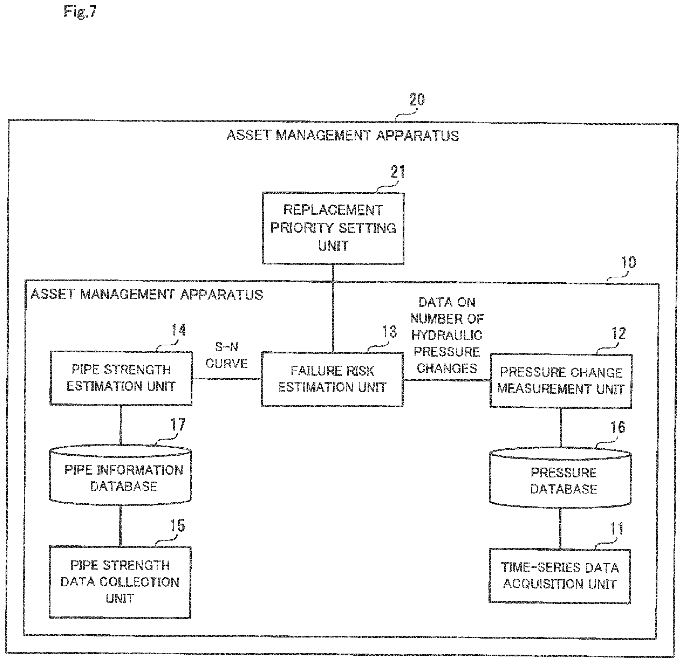

Subsequently, an asset management apparatus in the present example embodiment will be described with reference to FIG. 7. FIG. 7 is a block diagram illustrating the configuration of the asset management apparatus in the example embodiment of the invention.

As shown in FIG. 7, an asset management apparatus 20 in the present example embodiment is an apparatus for managing piping equipment owned by a business. As shown in FIG. 7, the asset management apparatus 20 is provided with the pipe diagnosis apparatus 10 shown in FIG. 2 and a replacement priority setting unit 21.

When the failure risk estimation unit 13 in the pipe diagnosis apparatus 10 estimates a failure risk, the replacement priority setting unit 21 sets a replacement priority for each of the pipes that are included in the piping equipment, based on the estimated failure risk. Specifically, the replacement priority setting unit 21 sets a replacement priority for each pipe based on an index calculated by the failure risk estimation unit 13. Note that the index used for this priority setting may be any index out of the above-described indexes.

In other words, the replacement priority setting unit 21 may use any of the degree of fatigue D, the increase rate $\Delta D/\Delta t$ of the degree of fatigue, and the estimated remaining lifespan t. For example, if the degree of fatigue D is used, the replacement priority setting unit 21 sets priorities in which a pipe with a higher degree of fatigue is ranked first. Accordingly, businesses can carry out replacement of pipes starting from a pipe with a high failure risk, and thus it is possible to perform efficient replacement for minimizing failures of pipes owned by the businesses.

[Effect in Embodiment]

As described above, according to the present example embodiment, future progression of deterioration of a pipe is estimated. Therefore, it is possible to estimate the probability that a pipe will rupture, and, it is possible to further determine an appropriate replacement time and replacement order of the pipe. As a result, it is possible to efficiently suppress failure of piping equipment.

[Program]

It suffices for a program in the present example embodiment to be a program that causes a computer to execute steps S1 to S4 shown in FIG. 5. By installing this program in a computer, and executing the program, it is possible to realize the pipe diagnosis apparatus 10 and the pipe diagnosis method in the present example embodiment. In this case, a processor of the computer functions as the time-series data acquisition unit 11, the pressure change measurement unit 12, the failure risk estimation unit 13, the pipe strength estimation unit 14, and the pipe strength data collection unit 15, and performs processing.

In addition, in the present example embodiment, the pressure database 16 and the pipe information database 17 can be realized by storing data files that make up these databases to a storage apparatus provided in a computer such as a hard disk, or mounting a recording medium that stores such data files to a reading apparatus connected to the computer.

In addition, the program in the present example embodiment may also be executed by a computer system constituted by a plurality of computers. In this case, for example, a configuration may also be adopted in which each of the computers functions as one of the time-series data acquisition unit 11, the pressure change measurement unit 12, the failure risk estimation unit 13, the pipe strength estimation unit 14, and the pipe strength data collection unit 15. In addition, the pressure database 16 and the pipe information database 17 may also be constructed on a computer other than the computer that executes the program in the present example embodiment.

[Physical Configuration]

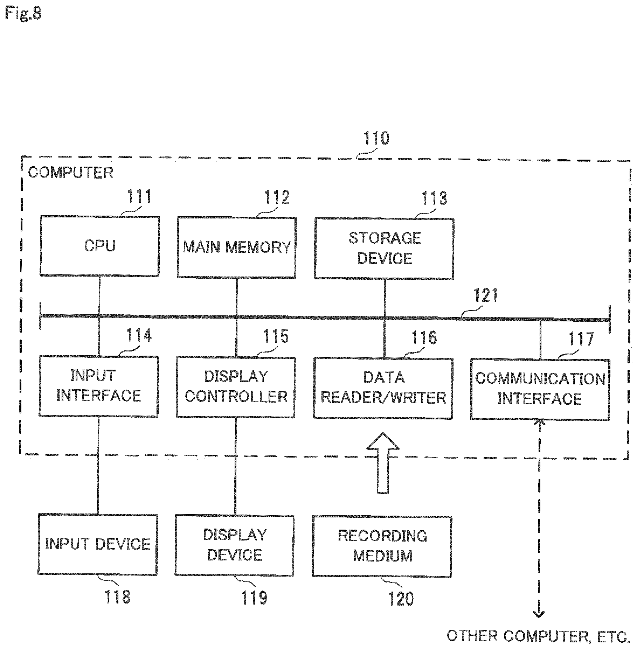

Here, a computer that realizes the pipe diagnosis apparatus 10 by executing the program in the present example embodiment will be described with reference to FIG. 8. FIG. 8 is a block diagram illustrating an example of a computer that realizes the pipe diagnosis apparatus in the example embodiment of the invention. In addition, in the present example embodiment, the asset management apparatus 20 can also be realized by the computer shown in FIG. 8.

As shown in FIG. 8, a computer 110 is provided with a CPU (Central Processing Unit) 111, a main memory 112, a storage apparatus 113, an input interface 114, a display controller 115, a data reader/writer 116, and a communication interface 117. These units are connected via a bus 121 to allow mutual data communication. Note that the computer 110 may also be provided with a GPU (Graphics Processing Unit) or an FPGA (Field-Programmable Gate Array) in addition to the CPU 111, or in place of the CPU 111.

The CPU 111 carries out various calculations by deploying programs (codes) in the present example embodiment stored in the storage apparatus 113 to the main memory 112, and executing these in a predetermined order. The main memory 112 is typically a volatile storage apparatus such as a DRAM (Dynamic Random Access Memory). In addition, the programs in the present example embodiment are provided in a state of being stored in a computer-readable recording medium 120. Note that the programs in the present example embodiment may also be programs distributed on the Internet connected via the communication interface 117.

In addition, specific examples of the storage apparatus 113 include a semiconductor storage apparatus such as a flash memory, in addition to a hard disk drive. The input interface 114 mediates data transmission between the CPU 111 and an input device 118 such as a keyboard or a mouse. The display controller 115 is connected to a display apparatus 119, and controls display on the display apparatus 119.

The data reader/writer 116 mediates data transmission between the CPU 111 and the recording medium 120, reads out a program from the recording medium 120, and writes a processing result from the computer 110 to the recording medium 120. The communication interface 117 mediates data transmission between the CPU 111 and another computer.

In addition, specific examples of the recording medium 120 include general-purpose semiconductor storage devices such as a CF (Compact Flash (registered trademark)) and an SD (Secure Digital), magnetic recording media such as a flexible disk, and optical recording media such as a CD-ROM (Compact Disk Read Only Memory).

Note that the pipe diagnosis apparatus 10 in the present example embodiment can also be realized by using hardware items corresponding to the units instead of a computer in which the programs are installed. Furthermore, a configuration may also be adopted in which a portion of the pipe diagnosis apparatus 10 is realized by a program, and the remaining portion is realized by hardware.

Although the present invention has been described above with reference to the example embodiment above, the invention is not limited to the above example embodiment. Various modifications understandable to a person skilled in the art can be made in configurations and details of the invention, within the scope of the invention.

INDUSTRIAL APPLICABILITY

As described above, according to the invention, it is possible to estimate future progression of deterioration of a pipe in piping equipment. The present invention is useful for applications in, for example, a system for distributing fluid using a pipe network, such as a pipe network system for delivering clean water from a water purification plant and pipelines for supplying oil and gas.

LIST OF REFERENCE SIGNS

| | |
|---|---|
| 10 | Pipe diagnosis apparatus |
| 11 | Time-series data acquisition unit |
| 12 | Pressure change measurement unit |
| 13 | Failure risk estimation unit |
| 14 | Pipe strength estimation unit |
| 15 | Pipe strength data collection unit |
| 16 | Pressure database |
| 17 | Pipe information database |
| 20 | Asset management apparatus |
| 21 | Replacement priority setting unit |
| 100 | Piping equipment |
| 101 | Water main |
| 102 | Pump |
| 103 | Pressure reducing valve |
| 104 | Water distribution block |
| 105 | Pressure sensor |
| 106 | Water purification plant |
| 110 | Computer |
| 111 | CPU |
| 112 | Main memory |
| 113 | Storage apparatus |
| 114 | Input interface |

115 Display controller
116 Data reader/writer
117 Communication interface
118 Input device
119 Display apparatus
120 Recording medium
121 Bus

**Claims**

1. A pipe diagnosis apparatus comprising:

   a time-series data acquisition unit (11) configured to acquire time-series data on pressure of a fluid in piping equipment to be diagnosed;
   a pressure change measurement unit (12) configured to measure a number of pressure changes in the fluid in a target pipe for each of different amplitudes of pressure changes, from the time-series data on the pressure of the fluid **characterised by** using a rainflow counting method; and
   a failure risk estimation unit (13) configured to calculate a degree of fatigue of the target pipe by using i) the measured number of pressure changes for each of different amplitudes of pressure changes and ii) an S-N curve indicating a number of times stress changes having an amplitude, corresponding to each of different amplitudes of pressure changes, repeatedly occur until the target pipe will break, and estimate the calculated degree of fatigue as a failure risk.

2. The pipe diagnosis apparatus according to claim 1, wherein the failure risk estimation unit (13) calculates an increase rate of the degree of fatigue per unit of time, and estimates the calculated increase rate of the degree of fatigue as the failure risk.

3. The pipe diagnosis apparatus according to claim 2, wherein the failure risk estimation unit (13) calculates a remaining lifespan that from the present time to the time when the pipe is statistically predicted to break, and estimates the calculated increase rate of the remaining lifespan as the failure risk.

4. The pipe diagnosis apparatus according to any one of claims 1 to 3, further comprising: a pipe strength estimation unit (14) configured to estimate a degree of deterioration based on a number of years that have elapsed since the target pipe was laid and an average lifespan of a pipe, and generate an S-N curve of the target pipe based on the estimated degree of deterioration.

5. The pipe diagnosis apparatus according to according to any one of claims 1 to 3, further comprising: a pipe strength estimation unit (14) configured to acquire an S-N curve of a pipe having the same material and a caliber as the target pipe from pipe information indicating that a pipe having a material, a caliber and an S-N curve are associated with each other, and use the acquired S-N curve as the S-N curve of the target pipe.

6. The pipe diagnosis apparatus according to claim 5, wherein if an S-N curve of a pipe having the same material and caliber as the target pipe is not stored in the pipe information, the pipe strength estimation unit (14) acquires an S-N curve of a pipe having the same material as the target pipe but a different caliber from the pipe information, and uses the acquired S-N curve as the S-N curve of the target pipe.

7. An asset management apparatus comprising:

   a pipe diagnosis apparatus (10) according to any one of claims 1 to 6, and
   a replacement priority setting unit (21) configured to set a replacement priority of each pipe included in the piping equipment, based on the failure risk estimated by the failure risk estimation unit (13).

8. A pipe diagnosis method comprising:

   (a) a step of acquiring time-series data on pressure of a fluid in piping equipment to be diagnosed;
   (b) a step of measuring a number of pressure changes in the fluid in a target pipe for each of different amplitudes of pressure changes, from the time-series data on the pressure of the fluid

   **characterised by** using a rainflow counting method;

   (c) a step of calculating a degree of fatigue of the target pipe by using i) the measured number of pressure changes for each of different amplitudes of pressure changes and ii) an S-N curve indicating a number of times stress changes having an amplitude, corresponding to each of different amplitudes of pressure changes, repeatedly occur until the target pipe will break; and
   (d) a step of estimating the calculated degree of fatigue as a failure risk.

9. A program for causing a computer to execute the method according to claim 8.

**Patentansprüche**

1.  Rohrdiagnosevorrichtung, umfassend:

    eine Erlangungseinheit für zeitserielle Daten (11), die konfiguriert ist, um zeitserielle Daten über Druck eines Fluids in einer zu diagnostizierenden Rohrleitungsausrüstung zu erlangen;
    eine Druckänderungs-Messeinheit (12), die konfiguriert ist, um eine Anzahl von Druckänderungen im Fluid in einem Zielrohr für jede von unterschiedlichen Amplituden von Druckänderungen aus den zeitseriellen Daten über den Druck des Fluids zu messen,
    **gekennzeichnet durch** Verwenden eines Rainflow-Zählverfahrens; und
    eine Fehlerrisiko-Schätzeinheit (13), die konfiguriert ist, um
    einen Ermüdungsgrad des Zielrohrs zu berechnen durch Verwenden von i) der gemessenen Anzahl von Druckänderungen für jede von unterschiedlichen Amplituden von Druckänderungen und ii) einer S-N-Kurve bzw. Wöhlerkurve, die eine Anzahl von Malen anzeigt, für welche Spannungsänderungen mit einer Amplitude entsprechend jeder von unterschiedlichen Amplituden von Druckänderungen wiederholt auftreten, bis das Zielrohr brechen wird, und
    den berechneten Ermüdungsgrad als ein Fehlerrisiko zu schätzen.

2.  Rohrdiagnosevorrichtung nach Anspruch 1, wobei die Fehlerrisiko-Schätzeinheit (13) eine Steigerungsrate des Ermüdungsgrads pro Zeiteinheit berechnet und die berechnete Steigerungsrate des Ermüdungsgrads als das Fehlerrisiko schätzt.

3.  Rohrdiagnosevorrichtung nach Anspruch 2, wobei die Fehlerrisiko-Schätzeinheit (13) eine verbleibende Lebensdauer berechnet, die von der gegenwärtigen Zeit bis zu einer Zeit reicht, zu welcher das Rohr gemäß statistischer Vorhersage bricht, und die berechnete Steigerungsrate der verbleibenden Lebensdauer als das Fehlerrisiko schätzt.

4.  Rohrdiagnosevorrichtung nach einem der Ansprüche 1 bis 3, weiterhin umfassend:
    eine Rohrfestigkeits-Schätzeinheit (14), die konfiguriert ist, um einen Verschlechterungsgrad basierend auf einer Anzahl von Jahren, die verstrichen sind, seit das Zielrohr verlegt wurde, und einer durchschnittlichen Lebensdauer eines Rohrs zu schätzen und eine S-N-Kurve des Zielrohrs basierend auf dem geschätzten Verschlechterungsgrad zu erzeugen.

5.  Rohrdiagnosevorrichtung nach einem der Ansprüche 1 bis 3, weiterhin umfassend:
    eine Rohrfestigkeits-Schätzeinheit (14), die konfiguriert ist, um eine S-N-Kurve eines Rohrs mit demselben Material und einem Rohrdurchmesser wie das Zielrohr aus Rohrinformation zu erlangen, die anzeigt, dass ein Rohr mit einem Material, einem Rohrdurchmesser und einer S-N-Kurve miteinander assoziiert sind, und die erlangte S-N-Kurve als die S-N-Kurve des Zielrohrs zu verwenden.

6.  Rohrdiagnosevorrichtung nach Anspruch 5, wobei dann, wenn eine S-N-Kurve eines Rohrs mit demselben Material und einem Rohrdurchmesser wie das Zielrohr nicht in der Rohrinformation gespeichert ist, die Rohrfestigkeits-Schätzeinheit (14) eine S-N-Kurve eines Rohrs mit demselben Material wie das Zielrohr, aber einem anderen Rohrdurchmesser, aus der Rohrinformation erlangt und die erlangte S-N-Kurve als die S-N-Kurve des Zielrohrs verwendet.

7.  Bestandsmanagementvorrichtung, umfassend:

    eine Rohrdiagnosevorrichtung (10) nach einem der Ansprüche 1 bis 6, und
    eine Austauschprioritäts-Einstelleinheit (21), die konfiguriert ist, um eine Austauschpriorität von jedem Rohr, das in die Rohrleitungsausrüstung enthalten ist, basierend auf dem durch die Fehlerrisiko-Schätzeinheit (13) geschätzten Fehlerrisiko einzustellen.

8.  Rohrdiagnoseverfahren, umfassend:

    (a) einen Schritt zum Erlangen zeitserieller Daten über einen Druck eines Fluids in einer zu diagnostizierenden Rohrleitungsausrüstung,
    (b) einen Schritt zum Messen einer Anzahl von Druckänderungen im Fluid in einem Zielrohr für jede von unterschiedlichen Amplituden von Druckänderungen aus den zeitseriellen Daten über den Druck des Fluids,
    **gekennzeichnet durch** Verwenden eines Rainflow-Zählverfahrens,
    (c) einen Schritt zum Berechnen eines Ermüdungsgrads des Zielrohrs durch Verwenden von i) der gemessenen Anzahl von Druckänderungen für jede von unterschiedlichen Amplituden von Druckänderungen und ii) einer S-N-Kurve bzw. Wöhlerkurve, die eine Anzahl von Malen anzeigt, für welche Spannungsänderungen mit einer Amplitude entsprechend jeder von unterschiedlichen Amplituden von Druckänderungen wiederholt auftreten, bis das Zielrohr brechen wird; und
    (d) einen Schritt zum Schätzen des berechneten Ermüdungsgrads als ein Fehlerrisiko.

9.  Programm zum Veranlassen, dass ein Computer das Verfahren nach Anspruch 8 ausführt.

**Revendications**

1. Appareil de diagnostic de tuyau comprenant :

   une unité d'acquisition de données chronologiques (11) configurée pour acquérir des données chronologiques sur une pression d'un fluide dans un équipement de tuyauterie à diagnostiquer;
   une unité de mesure de changement de pression (12) configurée pour mesurer un nombre de changements de pression dans le fluide dans un tuyau cible pour chacune de différentes amplitudes de changements de pression, à partir des données chronologiques sur la pression du fluide,
   **caractérisé par** l'utilisation d'un procédé de comptage de flux de pluie ; et
   une unité d'estimation de risque de défaillance (13) configurée pour
   calculer un degré de fatigue du tuyau cible par l'utilisation i) du nombre mesuré de changements de pression pour chacune de différentes amplitudes de changements de pression et ii) d'une courbe S-N indiquant un nombre de fois que des changements de contrainte ayant une amplitude, correspondant à chacune de différentes amplitudes de changements de pression, se produisent répétitivement jusqu'à la rupture du tuyau cible, et
   estimer le degré calculé de fatigue en tant qu'un risque de défaillance.

2. Appareil de diagnostic de tuyau selon la revendication 1,
   dans lequel l'unité d'estimation de risque de défaillance (13) calcule un taux d'augmentation du degré de fatigue par unité de temps, et estime le taux d'augmentation calculé du degré de fatigue en tant que le risque de défaillance.

3. Appareil de diagnostic de tuyau selon la revendication 2,
   dans lequel l'unité d'estimation de risque de défaillance (13) calcule une durée de vie restante depuis le temps présent jusqu'au temps auquel la rupture du tuyau est statistiquement prédite, et estime le taux d'augmentation calculé de la durée de vie restante en tant que le risque de défaillance.

4. Appareil de diagnostic de tuyau selon l'une quelconque des revendications 1 à 3, comprenant en outre :
   une unité d'estimation de résistance de tuyau (14) configurée pour estimer un degré de détérioration sur la base d'un nombre d'années qui se sont écoulées depuis la pose du tuyau cible et une durée de vie moyenne d'un tuyau, et générer une courbe S-N du tuyau cible sur la base du degré estimé de détérioration.

5. Appareil de diagnostic de tuyau selon l'une quelconque des revendications 1 à 3, comprenant en outre :
   une unité d'estimation de résistance de tuyau (14) configurée pour acquérir une courbe S-N d'un tuyau comportant le même matériau et un calibre en tant que le tuyau cible à partir d'informations de tuyau indiquant qu'un tuyau comportant un matériau, un calibre et une courbe S-N sont associés l'un à l'autre, et utiliser la courbe S-N acquise en tant que la courbe S-N du tuyau cible.

6. Appareil de diagnostic de tuyau selon la revendication 5,
   dans lequel, si une courbe S-N d'un tuyau comportant le même matériau et le même calibre que le tuyau cible n'est pas stockée dans les informations de tuyau, l'unité d'estimation de résistance de tuyau (14) acquiert une courbe S-N d'un tuyau comportant le même matériau que le tuyau cible mais un calibre différent à partir des informations de tuyau, et utilise la courbe S-N acquise en tant que la courbe S-N du tuyau cible.

7. Appareil de gestion d'actif, comprenant :

   un appareil de diagnostic de tuyau (10) selon l'une quelconque des revendications 1 à 6, et
   une unité de définition de priorité de remplacement (21) configurée pour définir une priorité de remplacement de chaque tuyau compris dans l'équipement de tuyauterie, sur la base du risque de défaillance estimé par l'unité d'estimation de risque de défaillance (13).

8. Procédé de diagnostic de tuyau comprenant :

   (a) une étape d'acquisition de données chronologiques sur une pression d'un fluide dans un équipement de tuyauterie à diagnostiquer ;
   (b) une étape de mesure d'un nombre de changements de pression dans le fluide dans un tuyau cible pour chacune de différentes amplitudes de changements de pression, à partir des données chronologiques sur la pression du fluide,
   **caractérisé par** l'utilisation d'un procédé de comptage de flux de pluie ;
   (c) une étape de calcul d'un degré de fatigue du tuyau cible par l'utilisation i) du nombre mesuré de changements de pression pour chacune de différentes amplitudes de changements de pression et ii) d'une courbe S-N indiquant un nombre de fois que des changements de contrainte ayant une amplitude, correspondant à chacune de différentes amplitudes de changements de pression, se produisent répétitivement jusqu'à la rupture du tuyau cible, et
(d) une étape d'estimation du degré calculé de fatigue en tant qu'un risque de défaillance.

9. Programme pour amener un ordinateur à exécuter le procédé selon la revendication 8.

Fig.1

10

**PIPE DIAGNOSIS APPARATUS**

11

TIME-SERIES DATA
ACQUISITION UNIT

12

PRESSURE CHANGE
MEASUREMENT UNIT

13

FAILURE RISK
ESTIMATION UNIT

Fig.2

PIPE DIAGNOSIS APPARATUS

10

14
PIPE STRENGTH ESTIMATION UNIT

S-N CURVE

13
FAILURE RISK ESTIMATION UNIT

DATA ON NUMBER OF HYDRAULIC PRESSURE CHANGES

12
PRESSURE CHANGE MEASUREMENT UNIT

17
PIPE INFORMATION DATABASE

16
PRESSURE DATABASE

15
PIPE STRENGTH DATA COLLECTION UNIT

11
TIME-SERIES DATA ACQUISITION UNIT

TIME-SERIES DATA ON HYDRAULIC PRESSURE

TIME

105

104

106

103

102

P

101

100

Fig.3

Fig.4

Fig.5

```
            ┌──────────┐
            │  Start   │
            └────┬─────┘
                 │         S1
        ┌────────▼────────────┐
        │ ACQUIRE TIME-SERIES DATA OF │
        │     HYDRAULIC PRESSURE      │
        └────────┬────────────┘
                 │         S2
        ┌────────▼────────────┐
        │ MEASURE NUMBER OF HYDRAULIC │
        │     PRESSURE CHANGES        │
        └────────┬────────────┘
                 │         S3
        ┌────────▼────────────┐
        │   ESTIMATE STRENGTH OF PIPE │
        └────────┬────────────┘
                 │         S4
        ┌────────▼────────────┐
        │    ESTIMATE FAILURE RISK    │
        └────────┬────────────┘
                 │
            ┌────▼─────┐
            │   End    │
            └──────────┘
```

Fig.6

Fig.7

ASSET MANAGEMENT APPARATUS 20

REPLACEMENT PRIORITY SETTING UNIT 21

ASSET MANAGEMENT APPARATUS 10

PIPE STRENGTH ESTIMATION UNIT 14

S-N CURVE

FAILURE RISK ESTIMATION UNIT 13

DATA ON NUMBER OF HYDRAULIC PRESSURE CHANGES

PRESSURE CHANGE MEASUREMENT UNIT 12

PIPE INFORMATION DATABASE 17

PRESSURE DATABASE 16

PIPE STRENGTH DATA COLLECTION UNIT 15

TIME-SERIES DATA ACQUISITION UNIT 11

Fig.8

COMPUTER

110

111 CPU

112 MAIN MEMORY

113 STORAGE DEVICE

121

114 INPUT INTERFACE

115 DISPLAY CONTROLLER

116 DATA READER/WRITER

117 COMMUNICATION INTERFACE

INPUT DEVICE

DISPLAY DEVICE

RECORDING MEDIUM

118

119

120

OTHER COMPUTER, ETC.

**EP 3 605 050 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2905528 A
- JP 2013061350 A